(19) 

**Europäisches Patentamt**
**European Patent Office**
**Office européen des brevets**

(11) **EP 4 689 394 B1**

(12) **EUROPEAN PATENT SPECIFICATION**

(45) Date of publication and mention
of the grant of the patent:
**13.05.2026 Bulletin 2026/20**

(21) Application number: **24733223.2**

(22) Date of filing: **19.06.2024**

(51) International Patent Classification (IPC):
*F04B 37/02* (2006.01)    *F04B 37/08* (2006.01)
*F04B 37/14* (2006.01)    *F04B 41/06* (2006.01)
*F04B 49/06* (2006.01)    *H01J 41/12* (2006.01)
*G06F 30/27* (2020.01)    *G06N 20/00* (2019.01)
*H01J 41/20* (2006.01)

(52) Cooperative Patent Classification (CPC):
**F04B 37/02; F04B 37/08; F04B 37/14; F04B 41/06;**
**F04B 49/065; G06F 30/27; G06N 20/00;**
**H01J 41/20;** G06F 2119/04; G06F 2119/08;
G06F 2119/14

(86) International application number:
**PCT/EP2024/067116**

(87) International publication number:
**WO 2024/261071 (26.12.2024 Gazette 2024/52)**

(54) **PREDICTIVE MAINTENANCE METHOD FOR A NEG VACUUM PUMP**

VORAUSSCHAUENDES WARTUNGSVERFAHREN FÜR EINE NEG VAKUUMPUMPE

MÉTHODE DE MAINTENANCE PRÉDICTIVE POUR UNE POMPE À VIDE NEG

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **21.06.2023 IT 202300012843**

(43) Date of publication of application:
**11.02.2026 Bulletin 2026/07**

(73) Proprietor: **SAES Getters S.p.A.**
**20045 Lainate (MI) (IT)**

(72) Inventors:
• **BUSETTO, Beatrice**
**20023 Cerro Maggiore MI (IT)**

• **RESCALDANI, Jacopo**
**20014 Nerviano MI (IT)**
• **MURA, Michele**
**28041 Arona NO (IT)**
• **SIVIERO, Fabrizio**
**20045 Lainate MI (IT)**

(74) Representative: **Novagraaf Group**
**Chemin de l'Echo 3**
**1213 Onex / Geneva (CH)**

(56) References cited:
**US-A1- 2022 188 775    US-A1- 2023 088 465**
**US-B1- 11 454 229**

**Description**

The use of Non-Evaporable Getter (NEG) pumps in getter pumping systems is now widespread for the inherent advantages of the getter technologies applied to vacuum pumps; in fact, NEG pumps are compact, less demanding in energy consumption and do not cause vibrations.

In view of the above, the demands on reliable NEG pumps in vacuum systems are constantly increasing so, even more than before, there is a need to optimize pumps performance and maintenance.

One way to achieve this is the monitoring of some pump parameters (such as pumping speed, residual capacity, estimated time to reactivation) and check if operational conditions satisfy the desired process. US 2023/088465 discloses a method for the regeneration of a reactivable NEG pump connected to a vacuum system, in which the regeneration is controlled by determination of the pressure in the vacuum system and by recording of the current through an ion getter pump which is combined to the NEG pump.

A computer-implemented method for determining the operability of a machinery is shown in EP 3751147. In particular, it describes how to check through a machine-learning algorithm whether or not compressor damages are compromising the overall functionality of the system.

In EP 1839151, a diagnostic analysis method for the failure protection of a generic vacuum pump is described. The method estimates the best-fitted model parameters from the minimum and maximum values evaluating the state variables of the system.

None of the above prior art documents address the problem of instantaneously estimating the residual lifetime of the main active component of the system, i.e. the getter pump, providing the user or customer with an immediate information for a forward-looking use and a scheduled maintenance, such as NEG pump reactivation.

The monitoring activity for NEG pumps can be accomplished by a digital controller according to the present invention connected to the vacuum system that comprises at least one NEG pump, said controller being integrated into a computer for user interface. When the controller has successfully concluded the data elaboration, the computer screen displays as outputs a desired set of NEG pump(s) parameters, such as pumping speed, residual capacity, estimated time to reactivation. Adding the possibility of networking the digital controller, information on the use of the NEG pumps could be shared with the pumps suppliers, in order to further improve the codes behind the controller's logic and deepen knowledge on the application systems of the NEG pumps, and more generally, with the vacuum products. A single digital controller may be used to control, collect and elaborate data from multiple NEG pumps connected thereto. Even though not limited to a specific number of NEG pumps, the minimal configuration is 1:1 (one controller for one NEG pump).

The above mentioned problem is solved by a method according to claim 1, and by a computer-implemented method according to claim 7.

According to the present invention, the controller is configured to perform, through a supervised learning algorithm, a computer-implemented method according to claim 7.

The present invention provides a performance monitoring method for the predictive maintenance of a NEG pump in a vacuum system which includes at least one pressure sensor. In a preferred embodiment according to the present invention the sensor is a Bayard-Alpert gauge, but other pressure sensors could be easily used such as extractor gauge, cold-cathode and, when an ion pump is also installed in the vacuum system, its current.

The invention is described in the following with reference to a non-limiting example, with the aid of the attached figures wherein:

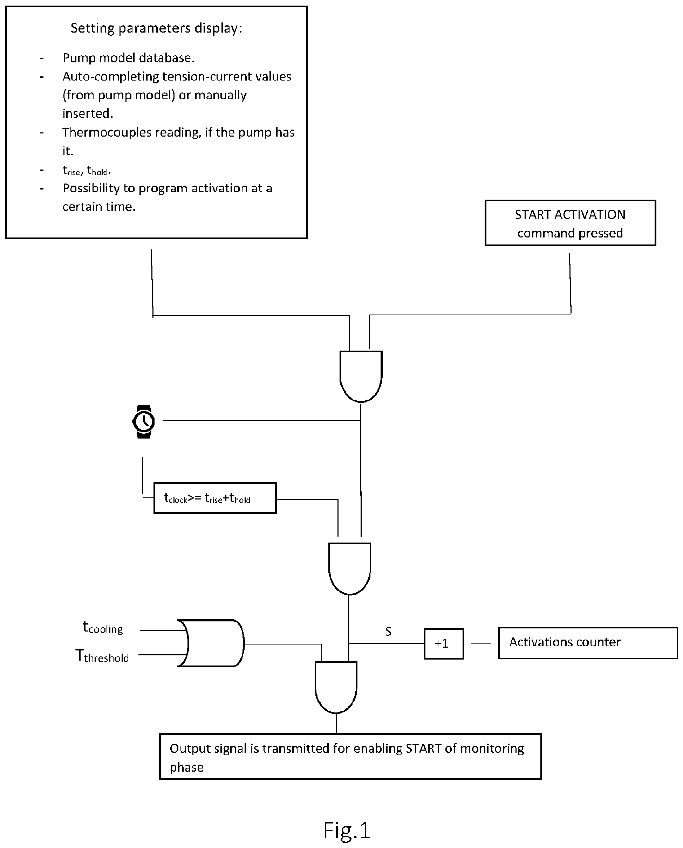

Figure 1 shows the logic tree representing the pump activation phase: the scheme indicates the steps and conditions to achieve before starting the pump monitoring phase.

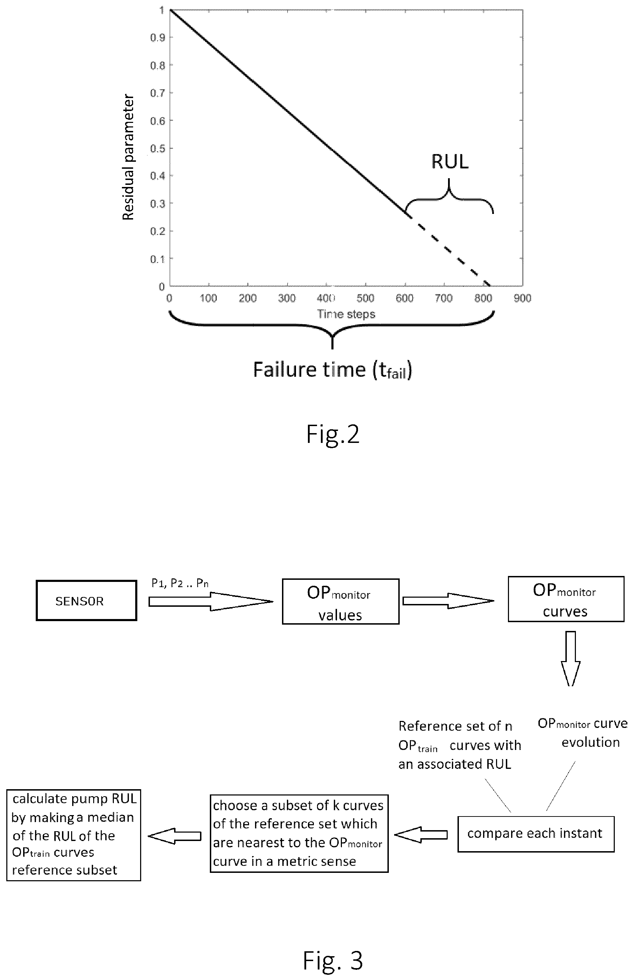

Figure 2 represents the linear evolution of the residual parameter (RP), defined below in equation [5], from 1 to 0 during the NEG pump lifetime; the residual useful life (RUL) of the pump is given by the difference between the total failure time $t_{fail}$ and the current time (the Time axis must be intended in arbitrary units).

Figure 3 shows a flowchart of a performance monitoring method for the predictive maintenance of a NEG pump in a vacuum system according to the present invention; in particular, it represents the method steps to be repeated cyclically.

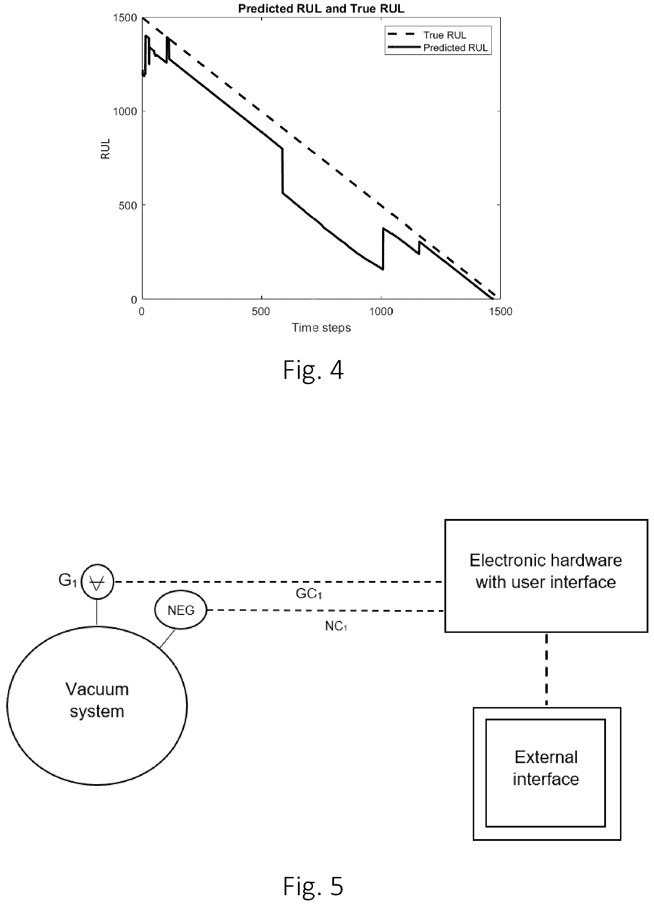

Figure 4 shows the trend of the predicted RUL versus the real RUL of a NEG high-vacuum pump as a result of a n test from an experimental test performed on a single stack NEG pump with gaseous composition in a vacuum system of 20% CO, 20% $O_2$ and 60% $H_2$ (the Time axis must be intended in arbitrary units).

Figure 5 is a scheme of a computer-readable storage device comprising a computer program according to the present invention connected to a vacuum system which comprises: a NEG high-vacuum pump "NEG" including electronics and a pressure gauge $G_1$, including electronics. Such components are operatively connected to the electronic hardware (computer) with a user interface through $NC_1$ and $GC_1$ connections respectively. In figure 5 an external interface is also shown.

Before starting the monitoring phase through the supervised learning algorithm, the system checks the NEG pump activation; this function, whose logic tree is shown in figure 1, comprises the steps of:

a) setting pump model and working parameters such as: technical specification of the pump model, working values of voltage/current, thermocouple reading (when present), the ramping time to reach the activation temperature $t_{rise}$, the maintenance time on which the NEG is kept at the activation temperature $t_{hold}$;
b) starting the activation of the pump manually or programming it at a certain time, so that when the activation of the pump starts, a clock is activated and the activation is over once $t_{clock} >= t_{rise} + t_{hold}$;
c) confirming the activation success and sending a success signal S to the system while updating the activation counter;
d) waiting for NEG readiness before starting data collection, readiness determined by:

d1) lapse of a cooling time, $t_{cooling}$ or
d2) temperature equal to or below a threshold temperature, $T_{threshold}$.

The monitoring method comprises the cyclic repetition of the following steps:

- Storing the pressure readouts from the at least one pressure sensor;

- Estimating and storing an operating parameter ($\widehat{OP}_{t\ monitor}$) curve obtained from instant $\widehat{OP}_{t\ monitor}$ values that are calculated from the pressure sensor readouts on the basis of the following equation [4];

- Comparing the evolution of the $\widehat{OP}_{t\ monitor}$ curve till the current time instant with a reference set of n $\widehat{OP}_{train}$ curves, as defined in equation [3] below, wherein each reference curve has an associated value for the pump residual useful life (RUL);

- Choosing a reference subset of at least two $\widehat{OP}_{train}$ curves, wherein the $\widehat{OP}_{train}$ curves subset comprises the nearest curves to the current $\widehat{OP}_{t\ monitor}$ curve in a metric sense (meaning the distance computed between operating parameter values);

- Calculating the time before reactivation is needed by considering the median of the RULs of the $\widehat{OP}_{train}$ curves reference subset.

In order to improve the predictive capacity of the method, it is preferable to add to the reference set, as additional reference curve, the instant $\widehat{OP}_{t\ monitor}$ curve calculated after the reactivation of the reactivable NEG pump is carried out.

The training cycle is managed by a supervised learning algorithm, in particular by a linear regression algorithm which can be generally defined as:

$$Y = \beta_0 + \beta_1 * X_1 + \ldots + \beta_m * X_m + \epsilon \qquad [1]$$

Where m indicates the number of sensors from which the input signals are obtained, *X* is the vector (i.e. the collection of values of a certain quantity) of the pressure values (P1, P2, ...Pn) taken adimensionally, i.e. as pure numbers, and *Y* is the vector of the RP values calculated according to equation [5] below. The linear regression allows to compute an estimation $\hat{\beta}_i$ of the coefficients $\beta_i$ and an estimation $\hat{\varepsilon}$ of the error $\varepsilon$, by minimizing the root mean squared error (RMSE) used as synthetic index for accuracy to measure the performance of the model. The RMSE is computed as:

$$RMSE = \sqrt{\frac{\sum_{i=1}^{N\_train}(\widehat{OP}_{train} - OP_i)^2}{N\_train}} \qquad [2]$$

where *N_train* is the number of data of the training dataset and $\widehat{OP}_{train}$ are the predicted values of the operating parameters computed as:

$$\widehat{OP}_{train} = \widehat{\beta_0} + \widehat{\beta_1} * P \qquad [3]$$

To prevent the model from performing badly on new data, the available dataset is split into complementary subsets, namely training dataset and validation dataset, and the model is trained on combinations of some subsets and validated on the remaining ones. This technique is the so-called "cross-validation" and it is used to make the algorithm more accurate on predictions.

The monitoring cycle is managed by a supervised learning algorithm, in particular a similarity-based model which predicts the instant operating parameter ($\widehat{OP}_{t\ monitor}$) based on the instant pressure readout $P_t$ as:

$$\widehat{OP}_{t\ monitor} = \widehat{\beta_0} + \widehat{\beta_1} * P_t \qquad [4]$$

The residual parameter (RP) of the NEG pump is given by the ratio between the RUL, i.e. the difference between the total failure time $t_{fail}$ and the current time, and the total failure time $t_{fail}$, i.e. the maximum operating time of the pump before it needs reactivation, as represented in figure 2, and its value is comprised between 0 and 1 as described in the equation:

$$RP = \frac{\text{RUL}}{t_{fail}} \qquad [5]$$

It is computed for each pressure curve comprised in the training dataset. Such training dataset might include, for each pressure curve, additional labels, e.g. gaseous composition, number of pump reactivations, total absorbed gas, auxiliary pumping speed, NEG pump model (in terms of geometric structure).

The above-described monitoring method, that is shown in figure 3, not only has the advantage of making a prediction of the RUL instant by instant for the entire duration of the monitoring, but is capable to provide the user with additional information (e.g. gaseous composition, residual sorption capacity, residual pumping speed) through appropriate labels associated to the pressure curves included into the training dataset.

The trend of the predicted RUL versus the real RUL is shown in figure 4; the graph shows in which time intervals the two values get closest and therefore when the prediction becomes most accurate. The plot is derived from an experimental test performed on a single stack NEG pump with gaseous composition in the vacuum system of 20% CO, 20% $O_2$ and 60% $H_2$. Variations in the predicted curve are due to the comparison of the instant $\widehat{OP}_{t\ monitor}$ curve with 5 nearest curves from the training dataset, and the instant predicted RUL is obtained from the median of the RULs of such subset of curves.

Any person skilled in the art could easily understand that, in order to reduce prediction error, it is possible to fit a linear regression, as done in [1], not on the whole training dataset, but on C subsets of the dataset obtained using clustering techniques. This method would result in a collection of estimated parameters $\widehat{\beta m_j}$ (j=1,...,C) which will be used for estimating the $\widehat{OP}_{t\ monitor}$ values during the monitoring phase. The proper parameters subset is chosen according to clustering techniques.

Moreover, other supervised learning algorithms could be used for the training and the monitoring phase, such as logistic regression, support vector machine.

According to another aspect of the present invention, a computer-implemented method is described. It comprises a machine learning algorithm having two consequential operating phases: a training and a monitoring phase. The training phase uses as input a training dataset and a validation dataset for determining operating parameters of a NEG pump in a high-vacuum system. The datasets comprise evolution in time of pressure within the vacuum system, the number of NEG pump reactivations, pumping speeds for different gases, the evolution in time of the amount of absorbed gases and the gaseous composition within the vacuum system. It also considers the number of auxiliary pumps present in the system, their pumping speed and the type of NEG pump.

The trained algorithm learns from the above data how to associate a pressure evolution curve to the NEG pump status and its RUL. The monitoring phase has the aim of estimating such status in real time, in terms of the above-mentioned operating parameter $\widehat{OP}_{t\ monitor}$, together with the time needed for NEG reactivation.

In another aspect, the digital controller according to the present invention is capable to find and report system anomalies such that:

- the activation of the NEG has not been successful (for example threshold power not delivered for the entire duration);
- the bulk of the NEG has reached saturation (the total capacity has been exploited according to the number of reactivations and to the estimated absorbed amount of gases);

- the estimated $\widehat{OP}_{t\,monitor}$ curve monotonically evolves below the group of $\widehat{OP}_{train}$ curves of the training dataset, meaning that pumping performance degradation is abnormally fast, for example due to a leak in the vacuum system.

A further aspect of the present invention is a computer-readable storage device comprising a computer program that performs the evolution monitoring and diagnostic analysis method for the predictive maintenance of a NEG high-vacuum pump. As represented in figure 5, the vacuum system is connected to an electronic hardware with user interface and an external interface to display the information and outputs of the monitoring method.

The electronic devices for acquisition and processing receive the system signals as input (for example, the pressure signals from the sensor). Said signals can be transmitted with an analog or digital signal or through a serial network or Local Area Network (LAN). Electronic devices process the signals with mathematical methods or programmable logic according to the method of the present invention described above. Electronics can include memories, ALUs (Arithmetic-Logic Unit), microprocessors, PCs, converters, interfaces, as well as power suppliers for pump power and/or their controllers. NEG pumps (and their electronic suppliers) mounted on the system can be connected to the processing electronic unit via cables or wireless network.

The system can be equipped with a local or remote user interface, which makes monitoring and managing the vacuum system easier for the user. This electronic configuration or one of its subsystem can thereof be considered part of a more general electronic system that controls other components of the vacuum system. During monitoring, experimental data can be collected with which it is possible to feed the training dataset of this device or of a similar one in the application or of a system with a different application. This aspect is of great interest, because it is capable to put multiple systems in communication and to collect and exchange information on the vacuum pump status and performance, creating a two-way direct line with the customers.

**Claims**

1. A method to predict the time before reactivation is needed of a reactivable NEG pump connected to a vacuum system comprising at least one pressure sensor operatively connected to a computer, said method comprising the cyclic repetition of the following steps:

    a) storing in the computer a plurality of pressure readouts from said at least one pressure sensor,

    b) estimating and storing in the computer an operating parameter $\widehat{OP}_{t\,monitor}$ curve obtained from instant $\widehat{OP}_{t\,monitor}$ values that are calculated by the computer from said pressure sensor readouts,

    c) comparing the evolution of said $\widehat{OP}_{t\,monitor}$ curve till the current time instant with a reference set of n $\widehat{OP}_{train}$ curves stored in the computer, wherein each of such reference curves has an associated value for the pump residual useful life RUL,

    d) choosing a reference subset of at least two $\widehat{OP}_{train}$ curves, wherein said reference subset comprises the nearest curves to the current $\widehat{OP}_{t\,monitor}$ curve in a metric sense,

    e) calculating by the computer the time before reactivation is needed by considering the median of the RULs of the $\widehat{OP}_{train}$ curves reference subset,

    f) outputting a desired set of NEG pump parameters resulting from said calculation through at least one local or remote user interface.

2. A method according to claim 1, wherein said method has an antecedent phase of checking the pump activation.

3. A method according to claim 2, wherein the phase of checking the pump activation comprises the steps of:

    a) setting pump model and working parameters such as: technical specification of the pump model, working values of voltage/current, thermocouple reading, the ramping time to reach the activation temperature $t_{rise}$, the maintenance time on which the NEG is kept at the activation temperature $t_{hold}$;
    b) starting the activation of the pump manually or programming it at a certain time, so that when the activation of the pump starts, a clock is activated and the activation is over once $t_{clock} >= t_{rise} + t_{hold}$;

c) confirming the activation success and sending a success signal S to the system while updating the activation counter;

d) waiting for NEG readiness before starting data collection, readiness being determined by:

d1) lapse of a cooling time, $t_{cooling}$ or

d2) temperature equal to or below a threshold temperature, $T_{threshold}$.

4. A method according to any of the preceding claims, wherein a residual parameter RP is given by the ratio between the RUL and the total failure time of the NEG pump, said residual parameter RP being comprised between 1 and 0.

5. A method according to any of the preceding claims, wherein the at least one pressure sensor is chosen between: Bayard-Alpert, extractor gauge, cold-cathode and, when an ion pump is also installed in the vacuum system, its current.

6. A method according to any of the preceding claims, wherein the instant

$\widehat{OP}_{t\ monitor}$ curve calculated after the reactivation of the NEG pump is added to the reference set of $\widehat{OP}_{train}$ curves.

7. A computer-implemented method comprising:

a machine learning algorithm, preferably a linear regression algorithm, having as input a training dataset for determining operating parameters of a NEG pump in a high-vacuum system, **characterized in that:**

a) the training dataset comprises the evolution in time of the pressure within the vacuum system, the number of NEG pump reactivations, the number of auxiliary pumps and their speed, the gaseous composition within the vacuum system and the type of NEG pump, and

b) said method provides as an output from the machine learning algorithm the NEG pump status and an estimated time needed for its reactivation.

8. Method according to claim 7, wherein said operating parameters comprise one or more parameters chosen from sorption capacity, pumping speed.

9. Method according to claim 7 or 8, wherein said output is given by determining the pressure profile curve, from a group of pre-labeled pressure profile curves included in the training dataset, which better represents the current status of the NEG pump to predict its maintenance.

10. A computer-readable storage device comprising:

a computer program which performs the evolution monitoring and diagnostic analysis method according to any of the preceding claims for the failure protection and predictive maintenance of a NEG high-vacuum pump.

11. A digital controller configured to perform the computer-implemented method of any of claims 7 to 9.

12. A digital controller according to claim 11, capable to detect and report anomalies such as:

• the not successful activation of the NEG;

• the bulk saturation of the NEG;

• the fact that the estimated $\widehat{OP}_{t\ monitor}$ curve is below the set of $\widehat{OP}_{train}$ curves of the training dataset.

**Patentansprüche**

1. Verfahren zum Vorhersagen der Zeit vor einer erforderlichen Reaktivierung einer reaktivierbaren NEG-Pumpe, die mit einem Vakuumsystem verbunden ist, umfassend mindestens einen Drucksensor, der funktionell mit einem Computer verbunden ist, das Verfahren umfassend die zyklische Wiederholung der folgenden Schritte:

a) Speichern in dem Computer einer Vielzahl von Druckablesungen von dem mindestens einen Drucksensor,

b) Schätzen und Speichern einer $\widehat{OP}_{t\ \text{überwachen}}$ Betriebsparameterkurve in dem Computer, die aus $\widehat{OP}_{t\ \text{überwachen}}$ Momentanwerten erhalten wird, die durch den Computer aus den Drucksensorablesungen berechnet werden,

c) Vergleichen der Entwicklung der $\widehat{OP}_{t\ \text{überwachen}}$ -Kurve bis zum aktuellen Zeitpunkt mit einem Referenzsatz von n $\widehat{OP}_{trainieren}$ -Kurven, die im Computer gespeichert sind, wobei jede dieser Referenzkurven einen zugeordneten Wert für die verbleibende Nutzlebensdauer, RUL, der Pumpe aufweist,

d) Auswählen einer Referenz-Teilmenge von mindestens zwei $\widehat{OP}_{trainieren}$ - Kurven, wobei die Referenz-Teilmenge die nächstliegenden Kurven zu der aktuellen $\widehat{OP}_{t\ \text{überwachen}}$ -Kurve in einem metrischen Sinne umfasst,

e) Berechnen, durch den Computer, der Zeit bis zur erforderlichen Reaktivierung durch Berücksichtigung des Medians der RULs des $\widehat{OP}_{trainieren}$ - Kurven-Referenzteilsatzes,

f) Ausgeben eines gewünschten Satzes von NEG-Pumpenparametern, die aus der Berechnung resultieren, über mindestens eine lokale oder Remote-Bedienerschnittstelle.

2. Verfahren nach Anspruch 1, wobei das Verfahren eine vorausgehende Phase einer Überprüfung der Pumpenaktivierung aufweist.

3. Verfahren nach Anspruch 2, wobei die Phase der Überprüfung der Pumpenaktivierung die folgenden Schritte umfasst:

a) Einstellen von Pumpenmodell und Arbeitsparametern wie: technische Spezifikation des Pumpenmodells, Arbeitswerte von Spannung/Strom, Thermoelementmesswerte, die Anstiegszeit zum Erreichen der Aktivierungstemperatur $t_{Anstieg}$, die Haltezeit, während der der NEG bei der Aktivierungstemperatur $t_{Halten}$ gehalten wird;

b) manuelles Starten der Aktivierung der Pumpe oder Programmieren derselben zu einem bestimmten Zeitpunkt, so dass beim Start der Aktivierung der Pumpe eine Uhr aktiviert wird und die Aktivierung beendet ist, sobald $t_{Uhr}$ >= tAnstieg+tHalten;

c) Bestätigen des Aktivierungserfolgs und Senden eines Erfolgssignals S an das System bei gleichzeitiger Aktualisierung des Aktivierungszählers;

d) Warten auf NEG-Bereitschaft vor Beginn der Datenerfassung, wobei die Bereitschaft bestimmt wird durch:

d1) Ablaufen einer Abkühlzeit, $t_{Kühlung}$ oder

d2) Temperatur gleich oder unterhalb einer Schwellentemperatur, $T_{Schwelle}$.

4. Verfahren nach einem der vorstehenden Ansprüche, wobei ein Restparameter, RP, durch das Verhältnis zwischen der RUL und der Gesamtausfallzeit der NEG-Pumpe gegeben ist, wobei der Restparameter, RP, zwischen 1 und 0 liegt.

5. Verfahren nach einem der vorstehenden Ansprüche, wobei der mindestens eine Drucksensor ausgewählt ist zwischen: Bayard-Alpert-, Extraktormessgerät, Kaltkathoden- und, wenn eine Ionenpumpe ebenfalls im Vakuumsystem installiert ist, deren Strom.

6. Verfahren nach einem der vorstehenden Ansprüche, wobei die nach der Reaktivierung der NEG-Pumpe berechnete $\widehat{OP}_{t\ \text{überwachen}}$ Momentankurve zu dem Referenzsatz von $\widehat{OP}_{trainieren}$ -Kurven hinzugefügt wird.

7. Computerimplementiertes Verfahren, umfassend:
einen maschinellen Lernalgorithmus, vorzugsweise einen linearen Regressionsalgorithmus, mit einem Trainingsdatensatz als Eingabe zur Bestimmung von Betriebsparametern einer NEG-Pumpe in einem Hochvakuumsystem, **dadurch gekennzeichnet, dass:**

a) der Trainingsdatensatz die zeitliche Entwicklung des Drucks innerhalb des Vakuumsystems, die Anzahl der NEG-Pumpen-Reaktivierungen, die Anzahl der Hilfspumpen und deren Drehzahl, die gasförmige Zusammensetzung innerhalb des Vakuumsystems und den Typ der NEG-Pumpe umfasst, und
b) das Verfahren als Ausgabe des maschinellen Lernalgorithmus den NEG-Pumpenstatus und eine geschätzte Zeit, die für dessen Reaktivierung benötigt wird, bereitstellt.

**8.** Verfahren nach Anspruch 7, wobei die Betriebsparameter einen oder mehrere Parameter umfassen, die aus Sorptionskapazität und Pumpendrehzahl ausgewählt sind.

**9.** Verfahren nach Anspruch 7 oder 8, wobei die Ausgabe durch Bestimmen der Druckprofilkurve aus einer Gruppe von vormarkierten Druckprofilkurven, die in dem Trainingsdatensatz eingeschlossen sind, gegeben wird, welche den aktuellen Status der NEG-Pumpe besser darstellt, um deren Wartung vorherzusagen.

**10.** Computerlesbare Speichervorrichtung, umfassend:
ein Computerprogramm, das das Verfahren zur Evolutionsüberwachung und Diagnoseanalyse nach einem der vorstehenden Ansprüche für den Ausfallschutz und die vorausschauende Wartung einer NEG-Hochvakuumpumpe durchführt.

**11.** Digitale Steuerung, die konfiguriert ist, um das computerimplementierte Verfahren nach einem der Ansprüche 7 bis 9 durchzuführen.

**12.** Digitaler Controller nach Anspruch 11, der imstande ist, Anomalien wie die folgenden zu detektieren und zu melden:

• die nicht erfolgreiche Aktivierung des NEG;
• die Volumensättigung des NEG;

• die Tatsache, dass die geschätzte $\widehat{OP}_{t\,\text{überwachen}}$ -Kurve unterhalb der Menge der $\widehat{OP}_{trainieren}$ -Kurven des Trainingsdatensatzes liegt.

**Revendications**

**1.** Procédé permettant de prédire le temps avant la nécessité de la réactivation d'une pompe NEG réactivable connectée à un système de vide comprenant au moins un capteur de pression connecté de manière fonctionnelle à un ordinateur, ledit procédé comprenant la répétition cyclique des étapes suivantes :

a) le stockage dans l'ordinateur d'une pluralité de lectures de pression provenant dudit au moins un capteur de pression,

b) l'estimation et le stockage dans l'ordinateur d'une courbe de paramètre $\widehat{OP}_{t\,moniteur}$ de fonctionnement obtenue à partir de valeurs instantanées $\widehat{OP}_{t\,moniteur}$ calculées par l'ordinateur à partir des lectures du capteur de pression,

c) la comparaison de l'évolution de ladite $\widehat{OP}_{t\,moniteur}$ courbe jusqu'à l'instant présent avec un ensemble de référence de n $\widehat{OP}_{train}$ courbes stockées dans l'ordinateur, dans lequel chacune de ces courbes de référence a une valeur associée pour la durée de vie utile résiduelle de la pompe, RUL,

d) le choix d'un sous-ensemble de référence d'au moins deux $\widehat{OP}_{train}$ courbes, dans lequel ledit sous-ensemble de référence comprend les courbes les plus proches de la courbe actuelle $\widehat{OP}_{t\,moniteur}$ au sens métrique,
e) le calcul, par l'ordinateur, du temps nécessaire avant la réactivation en tenant compte de la médiane des RUL du sous-ensemble de référence de $\widehat{OP}_{train}$ courbes,
f) l'émission d'un ensemble souhaité de paramètres de pompe NEG résultant dudit calcul par le biais d'au moins une interface utilisateur locale ou distante.

**2.** Procédé selon la revendication 1, dans lequel ledit procédé a une phase antécédente de vérification de l'activation de pompe.

3. Procédé selon la revendication 2, dans lequel la phase de vérification de l'activation de pompe comprend les étapes consistant à :

   a) régler le modèle de pompe et des paramètres de fonctionnement tels que : les spécifications techniques du modèle de pompe, les valeurs de fonctionnement de tension/courant, la lecture du thermocouple, le temps de montée en charge pour atteindre la température d'activation $t_{augmentation}$, le temps de maintenance pendant lequel la NEG est maintenue à la température d'activation $t_{maintien}$ ;
   b) démarrer l'activation de la pompe manuellement ou la programmer à une certaine heure, de sorte que lorsque l'activation de la pompe démarre, une horloge est activée et l'activation est terminée une fois $t_{horloge} >= t_{augmentation} + t_{maintien}$ ;
   c) confirmer le succès de l'activation et envoyer un signal de réussite S au système tout en mettant à jour le compteur d'activations ;
   d) attendre l'état de préparation de la NEG avant de commencer la collecte des données, l'état de préparation étant déterminé par :

   d1) un laps de temps de refroidissement, $t_{refroidissement}$ ou
   d2) une température égale ou inférieure à un seuil de température, $T_{seuil}$.

4. Procédé selon l'une quelconque des revendications précédentes, dans lequel un paramètre résiduel RP est donné par le rapport entre la RUL et le temps de défaillance total de la pompe NEG, ledit paramètre résiduel RP étant compris entre 1 et 0.

5. Procédé selon l'une quelconque des revendications précédentes, dans lequel l'au moins un capteur de pression est choisi entre : Bayard-Alpert, jauge d'extraction, cathode froide et, lorsqu'une pompe à ions est également installée dans le système de vide, son courant.

6. Procédé selon l'une quelconque des revendications précédentes, dans lequel la courbe instantanée $\widehat{OP}_{t\,moniteur}$ calculée après la réactivation de la pompe NEG est ajoutée à l'ensemble de courbes de $\widehat{OP}_{train}$ référence.

7. Procédé mis en œuvre par ordinateur comprenant :
   un algorithme d'apprentissage automatique, de préférence un algorithme de régression linéaire, ayant en guise d'entrée un ensemble de données d'entraînement permettant de déterminer des paramètres de fonctionnement d'une pompe NEG dans un système de vide poussé, **caractérisé en ce que** :

   a) l'ensemble de données d'entraînement comprend l'évolution dans le temps de la pression à l'intérieur du système de vide, le nombre de réactivations de pompes NEG, le nombre de pompes auxiliaires et leur vitesse, la composition gazeuse à l'intérieur du système de vide et le type de pompe NEG, et
   b) ledit procédé fournit, en guise de sortie de l'algorithme d'apprentissage automatique, l'état de la pompe NEG et une estimation du temps nécessaire à sa réactivation.

8. Procédé selon la revendication 7, dans lequel lesdits paramètres de fonctionnement comprennent un ou plusieurs paramètres choisis parmi la capacité de sorption, la vitesse de pompage.

9. Procédé selon la revendication 7 ou 8, dans lequel ladite sortie est donnée en déterminant la courbe de profil de pression, à partir d'un groupe de courbes de profil de pression pré-marquées incluses dans l'ensemble de données d'entraînement, qui représente mieux l'état actuel de la pompe NEG pour prédire sa maintenance.

10. Dispositif de stockage lisible par ordinateur comprenant :
    Programme informatique qui effectue le procédé de surveillance d'évolution et d'analyse diagnostique selon l'une quelconque des revendications précédentes pour la protection contre les défaillances et la maintenance prédictive d'une pompe à vide poussée NEG.

11. Dispositif de commande numérique configuré pour réaliser le procédé mis en œuvre par ordinateur selon l'une quelconque des revendications 7 à 9.

12. Dispositif de commande numérique selon la revendication 11, capable de détecter et de signaler des anomalies telles que :

- l'échec de l'activation de la NEG ;
- la saturation apparente de la NEG ;

- le fait que la courbe estimée $\widehat{OP}_{t\,moniteur}$ est inférieure à l'ensemble de courbes de l'ensemble de $\widehat{OP}_{train}$ données d'entraînement.

Setting parameters display:

- Pump model database.
- Auto-completing tension-current values (from pump model) or manually inserted.
- Thermocouples reading, if the pump has it.
- $t_{rise}$, $t_{hold}$.
- Possibility to program activation at a certain time.

START ACTIVATION command pressed

$t_{clock} >= t_{rise} + t_{hold}$

$t_{cooling}$

$T_{threshold}$

S

+1

Activations counter

Output signal is transmitted for enabling START of monitoring phase

Fig.1

Failure time (t$_{fail}$)

Fig.2

SENSOR → P1, P2 .. Pn → OP$_{monitor}$ values → OP$_{monitor}$ curves

Reference set of n OP$_{train}$ curves with an associated RUL

OP$_{monitor}$ curve evolution

calculate pump RUL by making a median of the RUL of the OP$_{train}$ curves reference subset ← choose a subset of k curves of the reference set which are nearest to the OP$_{monitor}$ curve in a metric sense ← compare each instant

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2023088465 A
- EP 3751147 A
- EP 1839151 A